# EUROPÄISCHE PATENTSCHRIFT

(11) **EP 1 784 291 B1**
(45) Veröffentlichungstag und Bekanntmachung des Hinweises auf die Patenterteilung: **25.04.2012**
(21) Anmeldenummer: 05773898.1
(22) Anmeldetag: 24.08.2005
(51) Int. Cl.: B27C 9/04, B27B 5/065, B23D 47/04

(54) **BEARBEITUNGSEINRICHTUNG, INSBESONDERE PLATTENAUFTEILSÄGEEINRICHTUNG**
MACHINING DEVICE, PARTICULARLY PLATE CUTTING DEVICE
DISPOSITIF D'USINAGE, EN PARTICULIER DISPOSITIF DE SCIE A PANNEAUX

(30) Priorität: 03.09.2004 AT 14782004
(43) Veröffentlichungstag der Anmeldung: 16.05.2007
(73) Patentinhaber: AWB Maschinenbau GmbH, 4563 Micheldorf (AT)
(72) Erfinder: LECHNER, Rudolf, A-4552 Wartberg an der Krems (AT)
(74) Vertreter: Ofner, Clemens
(86) Internationale Anmeldenummer: PCT/AT2005/000335
(87) Internationale Veröffentlichungsnummer: WO 2006/024058

(56) Entgegenhaltungen:
- AT-B- 407 504
- DE-A1- 3 522 278
- DE-A1- 3 912 627
- US-A- 4 736 511

## Beschreibung

Die Erfindung betrifft eine Bearbeitungseinrichtung, wie sie im Oberbegriff des Anspruches 1 beschrieben ist. Eine solche Einrichtung ist aus AT 407504 B bekannt.

Aus dem Dokument AT 407 504 B ist eine Bearbeitungseinrichtung für plattenförmige Werkstücke bekannt. Diese ist für wahlweise an entgegengesetzten Oberflächen mit Säge- und/oder Fräsvorrichtung zu bearbeitende plattenförmige Werkstücke ausgebildet und besteht aus einem Maschinengestell, das eine Auflagefläche für die Werkstücke ausbildet sowie einer Spannvorrichtung und Vorschubvorrichtung für die Werkstücke. In Bezug auf eine Auflagefläche sind gegenüberliegende Höhen- und/oder Seitenführungen vorgesehen, auf denen unabhängig voneinander linear verfahrbare Vorrichtungsträger für höhenverstellbare Bearbeitungsvorrichtung, wie Sägevorrichtung und Fräsvorrichtung, angeordnet sind, die bevorzugt fluchtend zueinander verlaufende Bearbeitungsebenen ausbilden.

Aus einem weiteren Dokument DE 35 22 278 A1 ist eine Einrichtung zum Bearbeiten plattenförmiger Werkstücke bekannt, mit einem, eine insbesondere horizontale Werkstückauflagefläche ausbildenden Werkstückauflagetisch und mit einer Werkstückspannvorrichtung und einem Seitenanschlag. Unterhalb der Werkstückauflagefläche ist ein verfahrbarer Sägewagen vorgesehen und weist die Einrichtung weiter eine programmierbare Werkstückvorschubvorrichtung auf. Die Einrichtung ist weiter mit einer Bohrvorrichtung, mit wenigstens einem Bohraggregat mit Bohrspindel, ausgestattet, das sowohl parallel zur Sägerichtung wie in einer Vorschubrichtung bewegbar ist.

Aus einem anderen Dokument DE 33 21 067 A1 ist ein Verfahren und eine Vorrichtung zum Bearbeiten von Sprossenleisten bekannt, wobei Bearbeitungsvorrichtungen aus Fräs- und Sägevorrichtungen gebildet sind, die mit ihren Bearbeitungswerkzeugen in ihrer Lage zueinander einstell- und verstellbar sind. Die Fräs- und Sägevorrichtungen sind ortsfest im Maschinenständer gelagert und erfolgt die Bearbeitung der Sprossenleisten durch Verstellung dieser relativ zu den Werkzeugen der Fräs- und Sägevorrichtungen.

Aufgabe der Erfindung ist es, eine Bearbeitungseinrichtung zu schaffen, mit der in einem gesamteinheitlichen Fertigungsablauf aus Platten zusätzlich zur Aufteilung in Plattenelemente durch Sägevorgängen für die Weiterverarbeitung der Plattenelemente erforderliche Bearbeitungsvorgänge durchführbar sind.

Diese Aufgabe der Erfindung wird durch die Merkmale des Anspruches 1 erreicht. Der überraschende Vorteil dabei ist, dass mehrere Bearbeitungsvorgänge zeitlich oder arbeitstaktmäßig voneinander unabhängig zur Fertigung eines Bauteils aus einer Platte vorzunehmen sind, wodurch eine hohe Maßhaltigkeit und Fertigungsqualität bei hoher Wirtschaftlichkeit erreicht wird.

Vorteilhaft ist auch eine weitere Ausführungsform nach Anspruch 2, wodurch ein zusätzlicher Freiheitsgrad für die Verstellung des weiteren Bearbeitungsaggregats erreicht wird.

Vorteilhaft ist weiters eine Ausbildung nach Anspruch 3, wodurch eine die Auflagefläche für die Platte bildende Auflagevorrichtung, z.B. Rollenanordnung, universeller gestaltbar ist.

Durch die Ausbildung nach Anspruch 4 ist es möglich, eine Abtransporteinrichtung, insbesondere Absaugung, von Bearbeitungsrückständen in das im Tischgestell standardgemäß vorgesehene Absaugsystem einer Platten-Aufteilsägevorrichtung in vereinfachter Leitungsführung einzubinden.

Nach einer anderen Ausführungsvariante gemäß Anspruch 5 wird eine zur Auflagerfläche winkelig verlaufende Bearbeitungsrichtung von Werkzeugen des Bearbeitungsaggregats erreicht.

Vorteilhaft ist auch eine Weiterbildung nach Anspruch 6, wodurch einer Linearbewegung während eines Bearbeitungsvorganges als weiterer Freiheitsgrad der Bewegung eine Schwenkbewegung überlagert werden kann und damit weitere Bearbeitungsmöglichkeiten erreicht werden.

Vorteilhafte Weiterbildungen kennzeichnen auch die Ansprüche 7 und 8, wodurch kurze Verstellvorgange für das Bearbeitungsaggregat und damit eine rasche Aufeinanderfolge von Bearbeitungsvorgängen erreicht wird.

Möglich ist auch eine Ausbildung nach Anspruch 9, wodurch sich eine Verstellbarkeit eines Werkzeugträgers des Bearbeitungsaggregates erübrigt.

Bei der Ausgestaltung nach Anspruch 10 ist von Vorteil, dass eine vereinfachte Ausgestaltung des Vorrichtungsträgers erreicht wird.

Durch die Weiterbildung nach Anspruch 11 wird erreicht, dass auch eine exakte stirnseitige Bearbeitung mehrerer übereinander auf der Auflagefläche angeordneter Platten gewährleistet ist.

Durch die Ausbildung nach Anspruch 12 wird eine kompakte Anordnung des weiteren Bearbeitungsaggregats erreicht und können Bearbeitungsvorgänge in geringem Abstand zur Sägeebene vorgenommen werden.

Vorteilhaft ist aber auch eine Ausbildung nach Anspruch 13, weil dadurch eine exakte Referenzposition der Führungsvorrichtung für den Vorrichtungsträger des zusätzlichen Bearbeitungsaggregates erreicht wird.

Es ist aber auch eine Ausbildung nach Anspruch 14 vorteilhaft weil dadurch zusätzliche Führungsschienen eingespart werden.

Vorteilhaft ist auch eine Ausbildung nach Anspruch 15, da gegebenenfalls Verstellvorgänge der gesamten Platte mit der Vorschubeinrichtung bei der Vornahme von Bearbeitungsvorgängen in größerer Distanz zur Sägeebene entfallen können.

Gemäß einer Ausbildung wie im Anspruch 16 beschrieben, wird die Bearbeitungseinrichtung bzw. alle für die Herstellung des Bauteils erforderlichen Fertigungsvorgänge einheitlich und zentral programmgemäß und bevorzugt über unmittelbar von einer CAD-Konstruktion übernommenen Programm gesteuert und geregelt.

Nach vorteilhaften Weiterbildungen gemäß den Ansprüchen 17 bis 20 wird eine unterschiedliche Ausgestaltung mit standardgemäßen Komponenten und Bauelementen und damit eine Variantenvielfalt entsprechend jeweils speziellen Anforderungen erreicht.

Bei der Ausbildung gemäß Anspruch 21 wird eine recyclinggerechte Entsorgung der bei der Bearbeitung anfallenden Abfälle, insbesondere Späne und Staub erreicht und damit auch eine Belastung des Bedienungspersonals und der Betriebsstätte wirkungsvoll vermieden.

Möglich ist dabei auch eine Ausbildung nach Anspruch 22, weil dadurch eine eindeutige Zuordnung und unverwechselbare Kennzeichnung der bearbeiteten Bauteile erreicht wird.

Die Ausgestaltung nach Anspruch 23 ermöglicht eine Erhöhung des Wirtschaftlichkeitsfaktors bei dem Einsatz der Bearbeitungseinrichtung durch die Einsparung an die Bearbeitung nachgelagerter Vorgänge, insbesondere wird dadurch eine Vereinfachung und damit Kostenreduktion bei der Montage der Bauteile zu Baueinheiten erreicht.

Vorteilhaft ist die Ausbildung nach Anspruch 24, da Stillstandszeiten für die Umrüstung der Bearbeitungsaggregate reduziert werden.

Von Vorteil ist weiter eine Ausbildung nach Anspruch 25 wodurch die Bearbeitung der Platte, bei der ein Durchtritt eines Werkzeuges durch die Platte erforderlich ist, an beliebiger Stelle des Tisches vorgenommen werden kann.

Schließlich sind aber auch Ausbildungen wie in den Ansprüchen 26 und 27 beschrieben möglich, wodurch der Durchtritt von Werkzeugen bei der Bearbeitung eines Bauteils ungehindert erfolgen kann.

Die Erfindung wird im nachfolgenden anhand der in den Zeichnungen dargestellten Ausführungsbeispiele näher erläutert.

Es zeigen:
- Fig. 1: eine erfindungsgemäße Bearbeitungseinrichtung mit dem zusätzlichen Bearbeitungsaggregat geschnitten, gemäß den Linien I-I in Fig. 2;
- Fig. 2: eine Draufsicht auf die erfindungsgemäße Bearbeitungseinrichtung;
- Fig. 3: eine Ausführung eines Vorrichtungsträgers für die erfindungsgemäße Bearbeitungseinrichtung, in Ansicht, teilweise geschnitten;
- Fig. 4: eine weitere Ausbildung der erfindungsgemäßen Bearbeitungseinrichtung in Ansicht;
- Fig. 5: die Bearbeitungseinrichtung geschnitten gemäß den Linien V-V in Fig. 4;
- Fig. 6: eine andere Ausbildung der Bearbeitungseinrichtung in Ansicht, teilweise geschnitten;
- Fig. 7: eine weitere Ausbildung der Bearbeitungseinrichtung in vereinfachter Darstellung, in Ansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

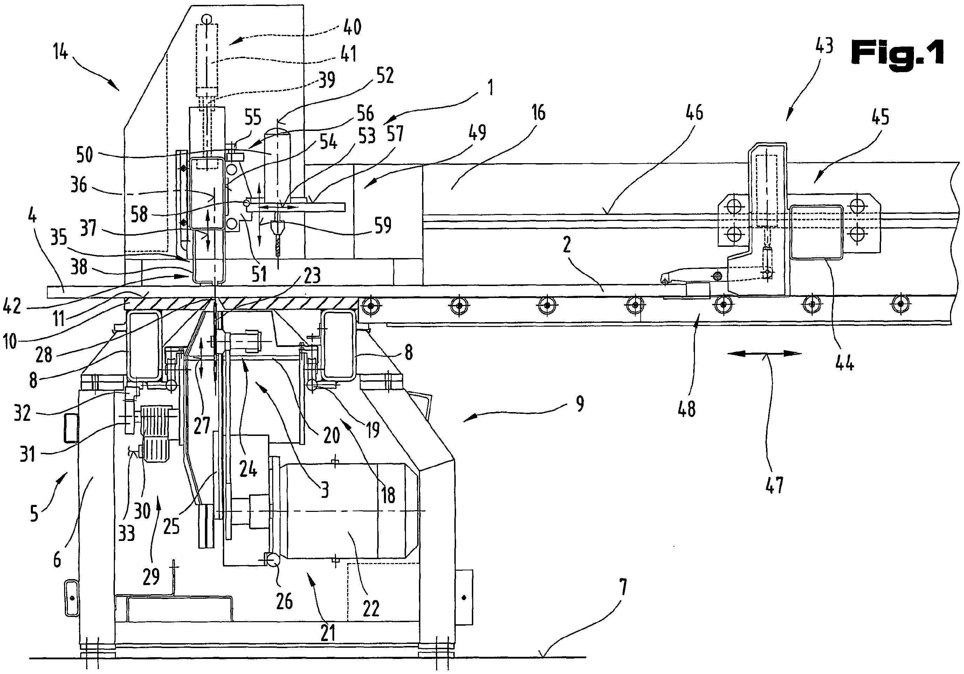

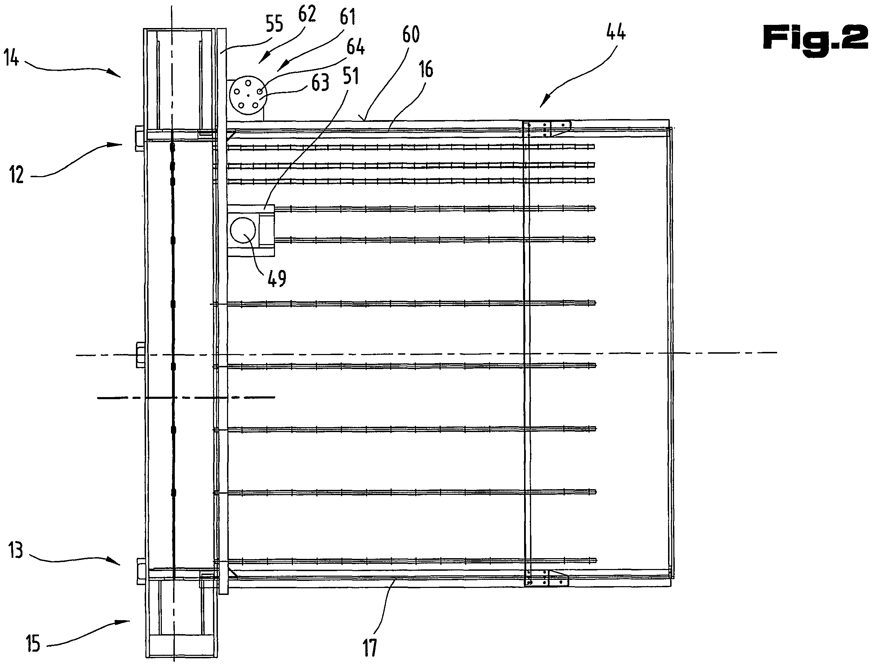

In den Fig. 1 und 2 ist eine Bearbeitungseinrichtung 1 für eine Säge- und/oder Fräs- und/oder Bohrbearbeitung von Platten 2 mit entsprechenden Bearbeitungsaggregaten 3 zur Herstellung bevorzugt fertig bearbeiteter Bauteile 4 aus der Platte 2 gezeigt. Ein Maschinengestell 5 mit Stehern 6 zur Abstützung auf einer Aufstandsfläche 7 und zu dieser parallel verlaufenden Längsholmen 8 einen Maschinenunterbau 9. Auf den Längsholmen 8 ist eine zweiteilige oder geschlitzte Tischplatte 10 angeordnet, die eine Auflagefläche 11 für die Platte 2 bzw. den Bauteil 4 bildet. An entgegengesetzten Stirnendbereichen 12, 13 des Maschinenunterbaus 9 sind die Auflagefläche 11 in vertikaler Richtung überragende Druckbalkentürme 14,15 angeordnet.

In den Stirnendbereichen 12, 13 ist am Maschinengestell 5 und/oder den Druckbalkentürmen 14, 15 je ein, durch ein Profil gebildeter Führungsholm 16, 17 in zur Längserstreckung der Längsholme 8 senkrecht verlaufenden Richtung und parallel zueinander und in einer zur Aufstandsfläche 7 parallel verlaufenden Ebene angeordnet. Im Maschinenunterbau 9 ist längs einer linearen Führungsanordnung 18, gebildet durch an den Längsholmen 8 befestigten Rundstangen 19 ein Laufwagen 20 mit dem Bearbeitungsaggregat 3, im gezeigten Ausführungsbeispiel eine Kreissägevorrichtung 21 verstellbar angeordnet. die Kreissägevorrichtung 21, bestehend aus einem Antriebsmotor 22 und einer, mit einem Sägeblatt 23 bestückten Sägewelle 24 ist im Laufwagen 20 in zur Aufstandsfläche 7 senkrechter Richtung in Führungen 25 und mittels Stellantrieb 26, gemäß einem Doppelpfeil 27, verstellbar. Damit kann das Sägeblatt 23 zwischen einer Stellung unterhalb der Auflagefläche 11 für einen Sägevorgang einen Schlitz 28 der Tischplatte 10 durchragend, verstellt werden.

Eine Antriebsvorrichtung 29 für den Laufwagen 20 bildet im gezeigten Ausführungsbeispiel ein am Laufwagen 20 angeordneter Elektro-Getriebemotor 30, der über ein Zahnrad 31 in Antriebsverbindung mit einer, am Längsholm 8 befestigen Zahnstange 32 steht. Der Antriebsmotor 22 der Kreissägevorrichtung 21, wie auch der Elektro-Getriebemotor 30 sind über Leitungen 33 mit einer Steuer- und Regeleinrichtung 34 der Bearbeitungseinrichtung 1 verbunden. Für ein Spannen der Platte 2 bzw. des Bauteils 4 während eines Bearbeitungsvorganges gegen die Auflagefläche 11 der Tischplatte 10 ist die Bearbeitungsvorrichtung 1 mit einer Niederhalteeinrichtung 35 versehen, die im Wesentlichen einen, in einem durch das Sägeblatt 23 gebildeten Sägeebene 36 zwischen den Druckbalkentürmen 14, 15 erstreckenden, und in vertikaler Richtung - gemäß einem Doppelpfeil 37 - verstellbaren Druckbalken 38 aufweist. Dieser Druckbalken 38 ist den Endbereichen in an den Druckbalkentürmen 14, 15 vorgesehenen Führungen 39 geführt und mit in den Druckbalkentürmen 14, 15 vorgesehenen Stellmitteln 40, z.B. mit Druckmedium beaufschlagte Druckzylinder 41, antriebsverbunden.

Der Druckbalken 38 ist um den Durchtritt des Sägeblatts 23 durch die Blatte 2 zu ermöglichen, durch ein C-Profil 42 gebildet, dessen schlitzförmige Öffnung der Tischplatte 10 zugewandt angeordnet ist.

Die Ansteuerung der Stellmittel 40, die selbstverständlich auch durch elektromotorisch betriebene Zahnstangen- oder Spindeltriebe gebildet sein können, erfolgt ebenfalls durch die Steuer- und Regeleinrichtung 34.

Zur Manipulation der Platte 2 weist die Bearbeitungseinrichtung 1 weiters eine Vorschubeinrichtung 43 mit einen so genannten Breitenanschlag 44 auf, der mittels einer Führungs- und Antriebsanordnung 45 in Führungsbahnen 46 der Führungsholme 16, 17, in zur Sägeebene 36 senkrechter Richtung - gemäß einem Doppelpfeil 47 - verstellbar ist und der in zur Verstellrichtung - gemäß Doppelpfeil 47 - senkrechten Richtung mit zueinander beabstandeten Spannzangen 48 bestückt ist. Die Führungs- und Antriebsanordnung 45 der Vorschubeinrichtung 43 wird beispielsweise ebenfalls durch Rollapparate und elektromotorisch betriebenen Zahnstangentrieb gebildet.

Die Bearbeitungseinrichtung 1 weist weiters im Bereich zwischen dem Druckbalken 38 der Niederhalteeinrichtung 35 und dem verstellbaren Breitenanschlag 44 der Vorschubeinrichtung 43 ein weiteres Bearbeitungsaggregat 49, z.B. eine Bohr- und/oder Fräseinheit 50, auf, welche auf einem Vorrichtungsträger 51 angeordnet ist, der eine Verstellung der Bohr- und/oder Fräseinheit 50 in einer zur Sägeebene 36 parallel verlaufenden Stellebene 52 und einer dazu senkrecht verlaufenden Richtung - gemäß Doppelpfeil 53 - ermöglicht. Dazu ist der Vorrichtungsträger 51 bevorzugt zweiteilig ausgebildet und in einer, an einer dem Breitenanschlag 44 zugewandten Seitenfläche 54 des Druckbalkens 38 angeordneten Führungsvorrichtung 55 verstellbar gelagert und mittels einer Antriebsanordnung 56, z.B. einem elektromotorisch betriebenen Zahnstangentrieb, verstellbar. Für die Verstellung der Bohr- und/oder Fräseinheit 50 in der zur Sägeebene 36 senkrecht verlaufenden Richtung - gemäß Doppelpfeil 53 - sind Teile des Vorrichtungsträgers 51 zueinander in Führungen 57 geführt und über einen Antrieb 58, z.B. einem Zahnstangentrieb oder Spindeltrieb, antriebsverbunden. Die Antriebsanordnung 56 wie auch der Antrieb 58, für den Vorrichtungsträger 51 und das Bearbeitungsaggregat 49 sind selbstverständlich ebenfalls über die Leitungen 33 mit der Steuer- und Regeleinrichtung 34 leitungsverbunden.

Die Bohr- und Fräseinheit 50 kann dabei beispielsweise mit einer integrierten Vorschubvorrichtung zur Durchführung eines Arbeitshubes in zur Auflagefläche 11 senkrechten Richtung gemäß - Pfeil 59 - versehen sein. Selbstverständlich besteht auch die Möglichkeit auf den Vorrichtungsträger 51 einen mit Eigenantrieb versehenen Schlitten vorzusehen.

Erwähnt sei weiters noch, wie schematisch dargestellt, dass die Bearbeitungseinrichtung 1 als Erweiterung der Auflagefläche 11 der Tischplatte 10 zur Auflage der Platte 2 mit zusätzlichen Rollenanordnungen ausgerüstet ist, die mit Freistellungen im Bewegungsraum der Spannzangen der Vorschubvorrichtung angeordnet sind.

Wie weiter der Fig. 2 zu entnehmen erstreckt sich die Führungsvorrichtung 55 für den Vorrichtungsträger 51 beispielsweise über eine Seitenbegrenzung 60 der Bearbeitungseinrichtung 1 bis in den Bereich eines der Drucktürme 14, 15. In diesem Bereich 61 ist nach einer möglichen Ausbildung der Bearbeitungseinrichtung 1 eine Werkzeugwechselstation 62 mit einem Werkzeugmagazin 63 z.B. für unterschiedliche Bohr- und Fräswerkzeuge 64 oder auch für weiteres zur Bearbeitung des Bauteils 4 erforderliches Zubehör z.B. Winkelkopf, Messwerkzeug etc. am Maschinengestell 5 positioniert. Dadurch kann eine automatische Bestückung des Bearbeitungsaggregates 49 nach Fertigungserfordernissen ermöglicht und eine wirtschaftlicher Einsatz der Bearbeitungseinrichtung 1 durch Taktzeitminimierung erreicht werden.

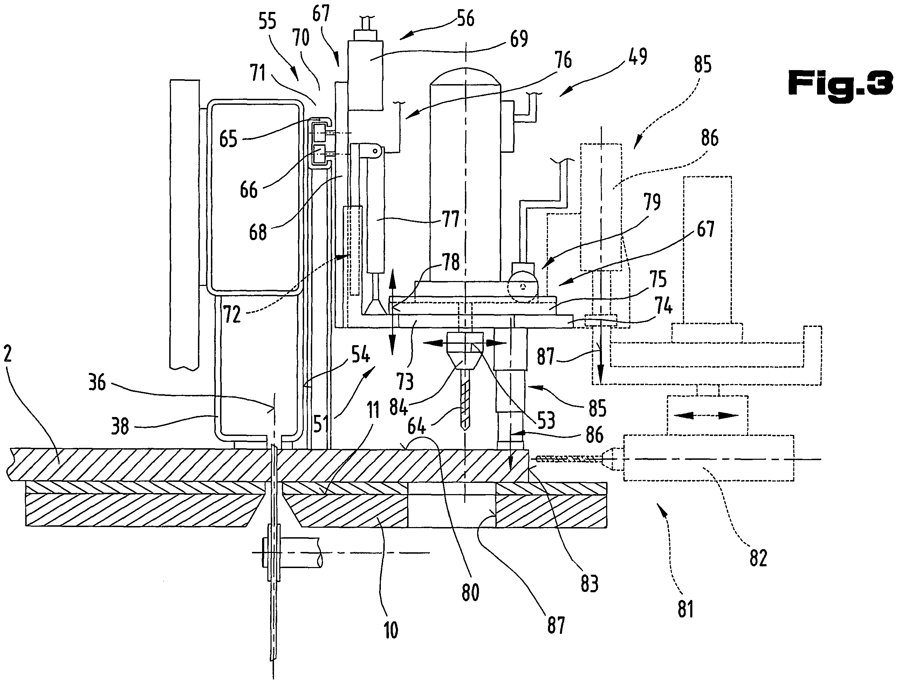

In der Fig. 3 ist eine mögliche Ausbildung des Vorrichtungsträgers 51 für das weitere Bearbeitungsaggregat 49 gezeigt. Gemäß dieser Ausbildung ist parallel verlaufend zum Druckbalken 38 die lineare Führungsvorrichtung 55 auf einem die Auflagefläche 11 überbrückenden Tragprofil 65 vorgesehen das beispielsweise als Führungsprofil, z.B. C-Träger ausgebildet ist. In diesem Führungsprofil ist der Vorrichtungsträger 51 z.B. über Führungsrollen 66, die einen Rollapparat ausbilden, verstellbar gelagert.

Durch das gegenüber der in Fig. 1 gezeigten und beschriebenen Ausführung mit der vom Druckbalken unabhängigen Führungsvorrichtung 55 ist eine Beeinflussung der Position des Vorrichtungsträgers 51 von etwaigen Lageabweichungen des Druckbalkens 38, wie eine solche durch das Spannen der Platte 2 eintreten kann, ausgeschlossen, d.h., dass eine vorgegebene, nicht veränderliche Referenzposition für die Führungsvorrichtung 55 und damit für den Vorrichtungsträger 51, gegeben ist.

Die Antriebsanordnung 56 des Vorrichtungsträgers 51 ist im gezeigten Ausführungsbeispiel als Zahnstangentrieb 67 mit einem auf einem Trägerelement 68, des in diesem Fall mehrteilig ausgebildeten Vorrichtungsträgers 51, angeordneten Motor 69 mit einem Zahnritzel 70, welches mit einer, mit dem Druckbalken 38 bzw. der Profilschiene 65 bewegungsfest verbundenen Zahnstange 71 kämt, gebildet.

In zur Auflagefläche 11 der Tischplatte 10 senkrecht verlaufender Richtungen sind am Trägerelement 68 Führungen 72 angeordnet, in denen ein weiteres L-förmig abgewinkeltes Trägerelement 73 verstellbar gelagert ist. Dieses Trägerelement 73 weist dabei einen Schenkel 74 auf, der parallel zur Auflagefläche 11 verläuft. Auf einer von der Auflagefläche 11 abgewandten Oberfläche 75 des Schenkels 74 ist das Bearbeitungsaggregat 49 unter Ausbildung von Führungen 75 stirnseitig aufgelagert und in zur Sägeebene 36 senkrechter Richtung verstellbar - gemäß Doppelpfeil 53.

Ein Stellantrieb 76, zwischen den Trägerelementen 68, 73, bildet beispielsweise ein elektromotorisch betriebener Spindeltrieb 77, womit das, das Bearbeitungsaggregat 49 aufnehmende Trägerelement 73, in zur Auflagefläche 11 senkrechter Richtung - gemäß Doppelpfeil 78 - verstellbar ist.

In den Führungen 75 ist das Bearbeitungsaggregat 49 über einen weiteren Stellantrieb 79 in der bereits vorhergehend beschriebenen Richtung senkrecht zur Sägeebene 36 verstellbar, wobei dieser Stellantrieb 79 ebenfalls durch einen Zahnstangentrieb 67 gebildet sein kann.

Sämtliche Antrieb bzw. Stellantriebe sind selbstverständlich über die Leitungen 33 mit der nicht weiters dargestellten Steuer- und Regeleinrichtung leitungsverbunden.

Wie der Fig. 3 noch der in strichlierten Linien gezeigten Darstellung zu entnehmen, ist mit dem weiteren, auf den Vorrichtungsträger 51 angeordneten Bearbeitungsaggregat 49 die Platte 2 bzw. der Bauteil 4 zusätzlich zu einer Bearbeitung, ausgehend von einer Oberseite 80, durch Anwendung von Zubehör 81, z.B. einem Winkelkopf 82, eine Bearbeitung, z.B. Bohren, Fräsen, etc., an einer Stirnfläche 83 der Platte 2 bzw. des Bauteils 4 möglich. Zur Erhöhung der Bearbeitungsqualität kann weiters am Trägerelement 74 im Nahebereich eines Werkzeugkopfes 84 eine zusätzliche Niederhaltevorrichtung 85, z.B. ein, mit einem Druckmedium beaufschlagter Druckzylinder, angeordnet sein, der auf ein bestimmtes Druckniveau eingeregelt, eine definierte Niederhaltekraft gemäß - Pfeil 86 - auf die Platte 2 bzw. den Bauteil 4 in Richtung der Auflagefläche 11, unabhängig eines Verstellweges des Vorrichtungsträgers 51 bei der Bearbeitung der Platte 2, ausübt.

Ebenfalls ist der Fig. 3 noch zu entnehmen, dass die Tischplatte 10 an vorgegebener Stelle mit einem Durchbruch 87 für den Durchtritt von Werkzeugen z.B. den Bohr- und/oder Fräswerkzeug 64 versehen sein kann. Möglich ist dabei auch den Durchbruch 87, wie nicht weiter dargestellt, mit einem Schieber oder einer Klappe verschließbar auszubilden und diesen nur bei Bedarf zu öffnen.

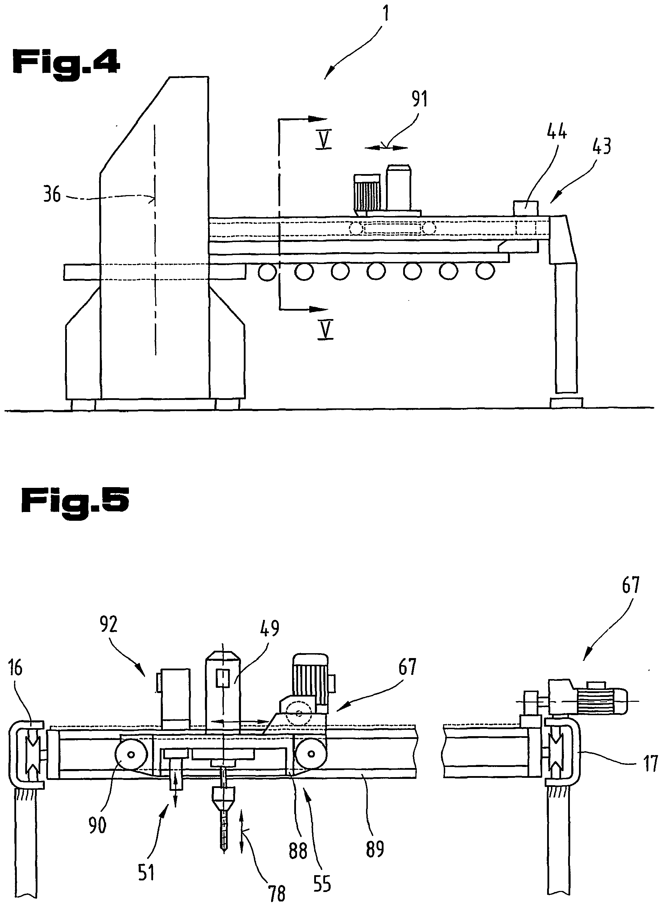

In den Fig. 4 und 5 ist eine andere Ausführung der erfindungsgemäßen Bearbeitungseinrichtung 1 gezeigt. Gemäß dieser Ausführung ist der Vorrichtungsträger 51 mit dem weiteren Bearbeitungsaggregat 49 als in der parallel zur Sägeebene 36 verlaufenden Führungsvorrichtung 55 verstellbarer Schlitten 88 ausgebildet. Die Führungsvorrichtung 55 wird beispielsweise durch ein Führungsprofil 89 gebildet, an dem der Schlitten 88 mit Laufrollen 90 gelagert ist und der beispielsweise über den Zahnstangentrieb 67 verstellt wird. Das Führungsprofil 89 ist in den Führungsholmen 16, 17, in denen auch die Vorschubeinrichtung 43 mit dem Breitenanschlag 44 verstellbar gelagert ist, verfahrbar über Rollapparate gelagert. Die Verstellung der Rollapparate und damit des Führungsprofils 89 in zur Sägeebene 36 senkrechter Richtung gemäß - Doppelpfeil 91 - erfolgt beispielsweise ebenfalls über einen weiteren Zahnstangentrieb 67.

Nach vorteilhaften Ausbildungen sind weitere Aggregate auf dem Schlitten 88 angeordnet. Z.B. ist es möglich, eine Kennzeichnungsvorrichtung 92, z.B. Stempeleinrichtung, Signiereinrichtung, Etikettiereinrichtung, vorzusehen, um die Bauteile mit für deren Identifikation, z.B. mit einer Materialkennzeichnung, Bauteilkennzeichnung, und weiteren, gegebenenfalls erforderlichen Zeichen, zu versehen.

Selbstverständlich können auch Aggregate, wie zusätzliche Niederhalter-, Absaug-, Zuführ- und Einsetzeinrichtungen für Verbindungsmittel, wie z.B. Dübel, Gewindehülsen etc., oder Absaugmittel auf dem Vorrichtungsträger 51 angeordnet sein.

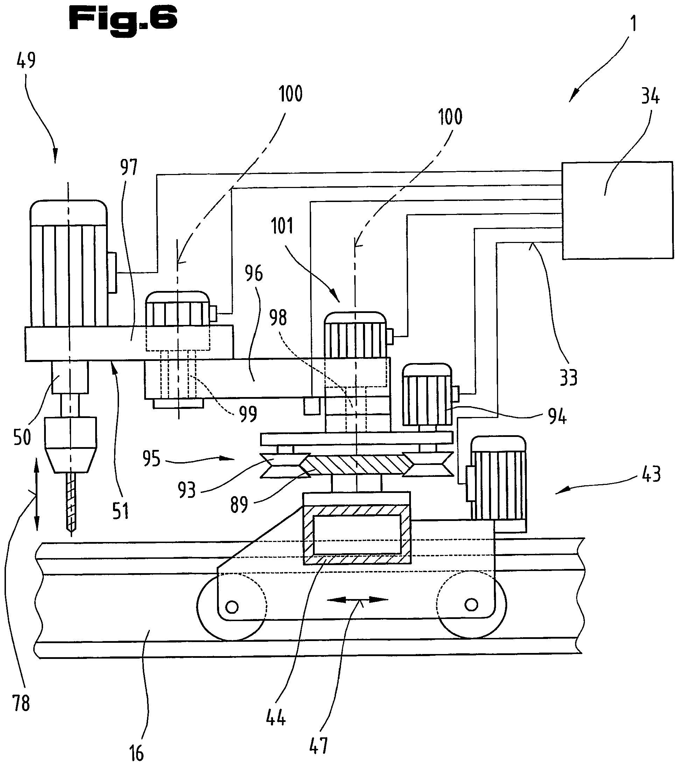

In der Fig. 6 ist eine weitere Ausbildung der Bearbeitungseinrichtung 1 mit dem weiteren Bearbeitungsaggregat 49 gezeigt. In diesem Ausführungsbeispiel ist der Vorrichtungsträger 51 auf einem, am verstellbaren Breitenanschlag 44 der Vorschubeinrichtung 43 angeordneten Führungsprofil 93 verfahrbar gelagert und besteht aus einem, mit Führungs- und/oder Antriebsrollen 93 und einem Antrieb 94 verstellbar gelagerten Schlitten 95 und aus zwei Tragarmen 96, 97, wovon ein Tragarm 96 auf den Schlitten 95 in einem Schwenklager 98 und der weitere Tragarm 97 auf dem Tragarm 96 über ein weiteres Schwenklager 99 gelagert ist. Schwenkachsen 100 sind senkrecht zur Auflagefläche für die Platte 2 verlaufend womit eine Schwenkbarkeit der Tragarme 96, 97 in zur Auflagefläche 11 parallelen Ebenen erfolgt. Die Verschwenkbarkeit der Tragarme 96, 97 relativ zueinander und des Tragarms 96 am Schlitten 95 wird über den Schwenklagern 98, 99 zugeordnete Schwenkantriebe 101 vorgenommen. Wie weiters gezeigt, sind zur Steuerung der Funktionen sämtliche Antriebe selbstverständlich über die Leitungen 33 mit der Steuer- und Regeleinrichtung 34 leitungsverbunden. Im dargestellten Ausführungsbeispiel ist das Bearbeitungsaggregat 49 beispielsweise mit einer internen Vorschubvorrichtung für die Verstellung des Bohr- und/oder Fräswerkzeuges 64 gemäß - Doppelpfeil 78 - ausgestattet.

Durch die Anordnung der Führungsvorrichtung 55 für den Vorrichtungsträger 51 des weiteren Bearbeitungsaggregats 49 auf dem Breitenanschlag 44 wird eine sehr wirtschaftliche Ausbildung der Bearbeitungseinrichtung 1 dadurch erreicht, dass bereits bestehende Führungs- und Vorschubseinrichtung genutzt werden und eignet sich diese Ausbildung insbesondere für einen nachträglichen Aufbau des weiteren Bearbeitungsaggregats 49 an bereits bestehenden Maschinen als Zusatzausrüstung für eine umfangreiche zusätzliche Bearbeitung von Platten zu Bauteilen.

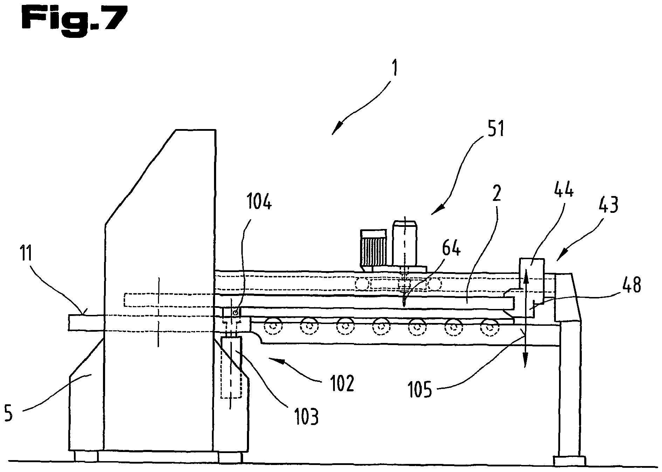

In der Fig. 7 ist eine weitere Ausbildung der Bearbeitungseinrichtung 1 in vereinfachter Darstellung gezeigt. Gemäß dieser ist vorgesehen die Platte 2 zur Vornahme eines Bearbeitungsvorganges mit dem zusätzlichen Bearbeitungsaggregat 49 z.B. Bohr- oder Fräsvorgang, von der Auflagefläche 11 abzuheben. Dazu ist beispielsweise im Maschinengestell 5 eine Hubvorrichtung 102 z.B. ein mittels Stellmittel 103 wie beispielsweise Druckzylinder, Spindeltrieb etc. in zur Auflagefläche 11 senkrechter Richtung aus dem Niveau der Auflagefläche 11 ausfahrbarer Hubbalken 104 vorgesehen. Weiter ist vorgesehen, bzw. vielfach bei derartigen Bearbeitungsvorrichtungen 1 Standard, dass die Spannzangen 48 am Breitenanschlag 44 in zur Auflagefläche 11 senkrechter Richtung gemäß - Doppelpfeil 105 - verstellbar sind. Dies ermöglicht, in Verbindung mit der Hubvorrichtung 102, ein zur Auflagefläche 11 paralleles Abheben der Platte 2 von der Auflagefläche 11, womit ein ungehinderter Durchtritt des Bohr- und/oder Fräswerkzeuges 64, bei der Vornahme eines Bearbeitungsvorganges bei der das Werkzeug durch die Platte 2 tritt, erreicht wird. Selbstverständlich kann auch in Verbindung mit der Möglichkeit der Schwenkbarkeit des Vorrichtungsträgers 51 bzw. des Bearbeitungsaggregates 49 am Vorrichtungsträger 51 eine winkelige Lage der Platte 2, durch einseitiges Abheben, entweder mit der Hubvorrichtung 102 oder den Spannzangen 48, eingenommen werden, wodurch ebenfalls ein für den Durchtritt des Werkzeuges genügender Freiraum gebildet wird.

Erwähnt sei selbstverständlich, dass die Bearbeitungseinrichtung 1 mit einer Reihe von Messeinrichtungen, Überwachungssensoren, etc. ausgestattet ist und die Steuer- und Regeleinrichtung 34 Rechner- und Speichereinrichtungen umfasst ist und bevorzugt unmittelbar aus der Konstruktion stammende CAD-Daten zur Programmierung eines Fertigungsablaufes heranzuziehen sind.

Der Ordnung halber sei abschließend darauf hingewiesen, dass zum besseren Verständnis des Aufbaus der Bearbeitungseinrichtung diese bzw. deren Bestandteile teilweise unmaßstäblich und/oder vergrößert und/oder verkleinert dargestellt wurden.

Vor allem können die einzelnen in den Fig. 1, 2; 3; 4, 5, 6; 7 gezeigten Ausführungen den Gegenstand von eigenständigen, erfindungsgemäßen Lösungen bilden. Die diesbezüglichen erfindungsgemäßen Aufgaben und Lösungen sind den Detailbeschreibungen dieser Figuren zu entnehmen.

**Bezugszeichenaufstellung**
- 1: Bearbeitungsvorrichtung
- 2: Platte
- 3: Bearbeitungsaggregat
- 4: Bauteil
- 5: Maschinengestell

- 6: Steher
- 7: Aufstandsfläche
- 8: Längsholm
- 9: Maschinenunterbau
- 10: Tischplatte

- 11: Auflagefläche
- 12: Stirnendbereich
- 13: Stirnendbereich
- 14: Druckbalkenturm
- 15: Druckbalkenturm

- 16: Führungsholm
- 17: Führungsholm
- 18: Linearführungsanordnung
- 19: Rundstange
- 20: Laufwagen

- 21: Kreissägevorrichtung
- 22: Antriebsmotor
- 23: Sägeblatt
- 24: Sägewelle
- 25: Führung

- 26: Stellantrieb
- 27: Doppelpfeil
- 28: Schlitz
- 29: Antriebsvorrichtung
- 30: Elelctro-Getriebemotor

- 31: Zahnrad
- 32: Zahnstange
- 33: Leitung
- 34: Steuer- und Regeleinrichtung
- 35: Niederhalteeinrichtung

- 36: Sägeebene
- 37: Doppelpfeil
- 38: Druckbalken
- 39: Führung
- 40: Stellmittel

- 41: Druckzylinder
- 42: C-Profil
- 43: Vorschubeinrichtung
- 44: Breitenanschlag
- 45: Führungs- und Antriebsanordnung

- 46: Führungsholm
- 47: Doppelpfeil
- 48: Spannzange
- 49: Bearbeitungsaggregat
- 50: Bohr- und/oder Fräseinheit

- 51: Vorrichtungsträger
- 52: Stellebene
- 53: Doppelpfeil
- 54: Seitenfläche
- 55: Führungsvorrichtung

- 56: Antriebsanordnung
- 57: Führung
- 58: Antrieb
- 59: Pfeil
- 60: Seitenbegrenzung

- 61: Bereich
- 62: Werkzeugwechselstation
- 63: Werkzeugmagazin
- 64: Bohr- und Fräswerkzeug
- 65: Tragprofil

- 66: Führungsrolle
- 67: Zahnstangentrieb
- 68: Trägerelement
- 69: Motor
- 70: Zahnritzel

- 71: Zahnstange
- 72: Führung
- 73: Trägerelement
- 74: Schenkel
- 75: Führung

- 76: Stellantrieb
- 77: Spindeltrieb
- 78: Doppelpfeil
- 79: Stellantrieb
- 80: Oberseite

- 81: Zubehör
- 82: Winkelkopf
- 83: Stirnfläche
- 84: Werkzeugkopf
- 85: Niederhaltevorrichtung

- 86: Pfeil
- 87: Durchbruch
- 88: Schlitten
- 89: Führungsprofil
- 90: Laufrolle

- 91: Doppelpfeil
- 92: Kennzeichnungsvorrichtung
- 93: Führungs- u/o Antriebsrolle
- 94: Antrieb
- 95: Schlitten

- 96: Tragarm
- 97: Tragarm
- 98: Schwenklager
- 99: Schwenklager
- 100: Schwenkachse

- 101: Schwenkantrieb
- 102: Hubvorrichtung
- 103: Stellmittel
- 104: Hubbalken
- 105: Doppelpfeil

## Patentansprüche

1. Bearbeitungseinrichtung (1), insbesondere Platten-Aufteilsägeeinrichtung mit einem eine Auflagefläche (11) für Platten (2) ausbildenden Maschinengestell (5), mit einem im Maschinengestell (5) in einer Linearführungsanordnung (18) mit einer Antriebsvorrichtung verstellbaren Laufwagen (20) mit zumindest einem ersten Bearbeitungsaggregat (3), insbesondere einer Kreissägevorrichtung (21), und mit einem mit Greifmitteln, z.B. Spannzangen (48), versehenen und in zu einer Verstellrichtung des Laufwagens (20) senkrechten Richtung mittels eines Vorschubantriebes in Führungsbahnen verstellbaren Breitenanschlag (44) und mit einem in einer zur Auflagefläche (11) senkrecht verlaufenden Sägeebene erstreckenden und in zur Auflagefläche (11) senkrechten Richtung verstellbaren Druckbalken (38) und mit zumindest einem weiteren Bearbeitungsaggregat (49) und mit einer Steuer- und Regeleinrichtung (34) für die Bearbeitungseinrichtung (1), **dadurch gekennzeichnet, dass** das weitere Bearbeitungsaggregat (49) auf einem im Bereich zwischen dem Druckbalken (38) und dem Breitenanschlag (44) angeordneten Vorrichtungsträger (51) angeordnet ist und bevorzugt durch eine Bohr- u/o Fräseinheit (50) gebildet ist und der Vorrichtungsträger (51) in zumindest einer parallel zur Verstellrichtung des Laufwagens (20) verlaufenden linearen Führungsvorrichtung (55) verstellbar gelagert ist.

2. Bearbeitungseinrichtung (1) nach Anspruch 1, **dadurch gekennzeichnet, dass** der Vorrichtungsträger (51) durch zumindest zwei relativ zueinander verstellbare Trägerelemente (68, 73) oder Tragarme (96, 97) gebildet ist.

3. Bearbeitungseinrichtung (1) nach Anspruch 1, **dadurch gekennzeichnet, dass** die Führungsvorrichtung (55) mit dem Vorrichtungsträger (51) oberhalb der Auflagefläche (11) angeordnet ist.

4. Bearbeitungseinrichtung (1) nach Anspruch 1, **dadurch gekennzeichnet, dass** die Führungsvorrichtung (55) mit dem Vorrichtungsträger (51) unterhalb der Auflagefläche (11) angeordnet ist.

5. Bearbeitungseinrichtung (1) nach einem der vorhergehenden Ansprüche, **dadurch gekennzeichnet, dass** der Vorrichtungsträger (51) in der Führungsvorrichtung (55) um eine zur Verstellrichtung parallel verlaufende Schwenkachse schwenkbar gelagert ist.

6. Bearbeitungseinrichtung (1) nach einem der vorhergehenden Ansprüche, **dadurch gekennzeichnet, dass** die Trägerelemente (68, 73) oder Tragarme (96, 97) des Vorrichtungsträgers (51) über zumindest eine, eine zur Auflagefläche (11) senkrecht verlaufende Schwenkachse (100) ausbildende, Schwenklager (98, 99) mit einander schwenkbar verbunden sind.

7. Bearbeitungseinrichtung (1) nach einem der vorhergehenden Ansprüche, **dadurch gekennzeichnet, dass** die Trägerelemente (68, 73) oder Tragarme (96, 97) über einen Schwenkantrieb (101) relativ zueinander verstellbar sind.

8. Bearbeitungseinrichtung (1) nach einem der vorhergehenden Ansprüche, **dadurch gekennzeichnet, dass** die Verstellung der Trägerelemente (68, 73) bzw. der Tragarme (96, 97) in zur Auflagefläche (11) parallelen Ebenen erfolgt.

9. Bearbeitungseinrichtung (1) nach einem der vorhergehenden Ansprüche, **dadurch gekennzeichnet, dass** der Vorrichtungsträger (51) bzw. zumindest ein Trägerelement (96, 97) in zur Auflagefläche (11) senkrecht verlaufenden Richtung verstellbar in der Führungsvorrichtung (55) gelagert ist.

10. Bearbeitungseinrichtung (1) nach einem der vorhergehenden Ansprüche, **dadurch gekennzeichnet, dass** das Bearbeitungsaggregat (49) am Vorrichtungsträger (51) bzw. einem Trägerelement (68, 73) schwenkbar gelagert ist.

11. Bearbeitungseinrichtung (1) nach einem der vorhergehenden Ansprüche, **dadurch gekennzeichnet, dass** der Vorrichtungsträger (51) und/oder die Trägerelemente (68, 73) und/oder das Bearbeitungsaggregat (49) in einer zur Auflagefläche (11) senkrechten Richtung verstellbar ausgebildet ist.

12. Bearbeitungseinrichtung (1) nach einem der vorhergehenden Ansprüche, **dadurch gekennzeichnet, dass** die Führungsvorrichtung (55) für den Vorrichtungsträger (51) am Druckbalken (3 8) angeordnet ist.

13. Bearbeitungseinrichtung (1) nach einem der vorhergehenden Ansprüche, **dadurch gekennzeichnet, dass** die Führungsvorrichtung (55) auf einem zum Druckbalken (38) parallel verlaufenden, am Maschinengestell (5) abgestützten, Tragprofil (65) angeordnet ist.

14. Bearbeitungseinrichtung (1) nach einem der vorhergehenden Ansprüche, **dadurch gekennzeichnet, dass** die Führungsvorrichtung (55) für den Vorrichtungsträger (51) in Führungsbahnen der Führungsholme (16, 17) des Breitenanschlags (44) verstellbar gelagert ist.

15. Bearbeitungseinrichtung (1) nach einem der vorhergehenden Ansprüche, **dadurch gekennzeichnet, dass** die Führungsvorrichtung (55) für den Vorrichtungsträger (51) längs einem am Breitenanschlag (44) angeordnetem Führungsprofils (89) verstellbar gelagert ist.

16. Bearbeitungseinrichtung (1) nach einem der vorhergehenden Ansprüche, **dadurch gekennzeichnet, dass** Antriebe des Vorrichtungsträgers (51) und/oder des Bearbeitungsaggregates (49) mit der Steuer- und Regeleinrichtung (34) der Bearbeitungseinrichtung (1) leitungsverbunden sind.

17. Bearbeitungseinrichtung (1) nach einem der vorhergehenden Ansprüche, **dadurch gekennzeichnet, dass** die Antriebe für den Vorrichtungsträger (51) durch Zahnstangentriebe (67) gebildet sind.

18. Bearbeitungseinrichtung (1) nach einem der vorhergehenden Ansprüche, **dadurch gekennzeichnet, dass** die Antriebe für den Vorrichtungsträger (51) durch Spindeltriebe gebildet sind.

19. Bearbeitungseinrichtung (1) nach einem der vorhergehenden Ansprüche, **dadurch gekennzeichnet, dass** die Antriebe des Vorrichtungsträgers (51) durch Elektromotore gebildet sind.

20. Bearbeitungseinrichtung (1) nach einem der vorhergehenden Ansprüche, **dadurch gekennzeichnet, dass** die Antriebe des Vorrichtungsträgers (51) durch mit einem Druckmedium beaufschlagbare Stellmittel z.B. Druckzylinder gebildet sind.

21. Bearbeitungseinrichtung (1) nach einem der vorhergehenden Ansprüche, **dadurch gekennzeichnet, dass** am Vorrichtungsträger (51) Absaugmittel für Staub, Späne etc. angeordnet sind.

22. Bearbeitungseinrichtung (1) nach einem der vorhergehenden Ansprüche, **dadurch gekennzeichnet, dass** am Vorrichtungsträger (51) eine Kennzeichnungsvorrichtung (92) zur An- oder Aufbringung von Informationsdaten auf die Platte (2) bzw. dem Bauteil (4) angeordnet sind.

23. Bearbeitungseinrichtung (1) nach einem der vorhergehenden Ansprüche, **dadurch gekennzeichnet, dass** am Vorrichtungsträger (51) Zuführ- und/oder Setzmittel für Verbindungsmittel, z.B. Dübel, Gewindehülsen etc., angeordnet sind.

24. Bearbeitungseinrichtung (1) nach einem der vorhergehenden Ansprüche, **dadurch gekennzeichnet, dass** am Druckbalken (38) und/oder Maschinengestell (5) zumindest ein Werkzeugmagazin (63) für Werkzeuge, z.B. Säge-, Bohr-, Fräs- , Gewindebohrwerkzeuge und/oder Werkzeugvorrichtungen z.B., Winkelkopf, Messmittel etc., angeordnet ist.

25. Bearbeitungseinrichtung (1) nach einem der vorhergehenden Ansprüche, **dadurch gekennzeichnet, dass** im Maschinengestell (5) eine Hubvorrichtung (102) zum Abheben der Platte (2) von der Auflagefläche (11) angeordnet ist.

26. Bearbeitungseinrichtung (1) nach einem der vorhergehenden Ansprüche, **dadurch gekennzeichnet, dass** in einer die Auflagefläche (11) ausbildenden Tischplatte (10) ein Durchbruch (87) für die Werkzeuge des Bearbeitungsaggregats (49) angeordnet ist.

27. Bearbeitungseinrichtung (1) nach einem der vorhergehenden Ansprüche, **dadurch gekennzeichnet, dass** der Durchbruch (87) verschließbar, z.B. mit einer Klappe, Schieber etc., ausgebildet sind.

## Claims

1. Machining device (1), in particular a plate cutting device, with a machine frame (5) constituting a support surface (11) for plates (2), with a carriage (20) displaceable in the machine frame (5) in a linear guide arrangement (18) by means of a drive device, at least a first machining unit (3), in particular a circular saw device (21), and a width stop (44) provided with a gripping means, e.g. clamping jaws (48), and displaceable by means of a feed drive in guide tracks in a direction perpendicular to the direction of displacement of the carriage (20), and a pressure beam (38) extending in a sawing plane running perpendicular to the support surface (11) and displaceable in the direction perpendicular to the support surface (11), and with at least one other machining unit (49), and with a control and regulating unit (34) for the machining device (1), **characterised in that** the other machining unit (49) is disposed on a device support (51) disposed in the region between the pressure beam (38) and the width stop (44) and preferably provided in the form of a boring and/or milling unit (50), and the device support (51) is mounted so as to be displaceable in a linear guide device (55) extending parallel with the direction of displacement of the carriage (20).

2. Machining device (1) as claimed in claim 1, **characterised in that** the device support (51) is provided in the form of at least two support elements (68, 73) or support arms (96, 97) which can be displaced relative to one another.

3. Machining device (1) as claimed in claim 1, **characterised in that** the guide device (55) is disposed together with the device support (51) above the support surface (11).

4. Machining device (1) as claimed in claim 1, **characterised in that** the guide device (55) is disposed together with the device support (51) underneath the support surface (11).

5. Machining device (1) as claimed in one of the preceding claims, **characterised in that** the device support (51) is mounted so as to be pivotable in the guide device (55) about a pivot axis extending parallel with the direction of displacement.

6. Machining device (1) as claimed in one of the preceding claims, **characterised in that** the support elements (68, 73) or support arms (96, 97) of the device support (51) are pivotably connected to one another by means of at least one pivot bearing (98, 99) forming a pivot axis (100) extending perpendicular to the support surface (11).

7. Machining device (1) as claimed in one of the preceding claims, **characterised in that** the support elements (68, 73) or support arms (96, 97) are displaceable relative to one another by means of a pivot drive (101).

8. Machining device (1) as claimed in one of the preceding claims, **characterised in that** the support elements (68, 73) and support arms (96, 97) are displaced in planes parallel with the support surface (11).

9. Machining device (1) as claimed in one of the preceding claims, **characterised in that** the device support (51) and at least one support element (96, 97) is mounted in the guide device (55) so as to be displaceable in the direction extending perpendicular to the support surface (11).

10. Machining device (1) as claimed in one of the preceding claims, **characterised in that** the machining unit (49) is mounted on the device support (51) respectively a support element (68, 73).

11. Machining device (1) as claimed in one of the preceding claims, **characterised in that** the device support (51) and/or the support elements (68, 73) and/or the machining unit (49) is designed to be displaceable in the direction perpendicular to the support surface (11).

12. Machining device (1) as claimed in one of the preceding claims, **characterised in that** the guide device (55) for the device support (51) is disposed on the pressure beam (38).

13. Machining device (1) as claimed in one of the preceding claims, **characterised in that** the guide device (55) is disposed on a support section (65) supported on the machine frame (5) extending parallel with the pressure beam (38).

14. Machining device (1) as claimed in one of the preceding claims, **characterised in that** the guide device (55) for the device support (51) is mounted so as to be displaceable in guide tracks of the guide spars (16, 17) of the width stop (44).

15. Machining device (1) as claimed in one of the preceding claims, **characterised in that** the guide device (55) for the device support (51) is mounted so as to be displaceable along a guide section (89) disposed on the width stop (44).

16. Machining device (1) as claimed in one of the preceding claims, **characterised in that** drives of the device support (51) and/or machining unit (49) are hard-wired to the control and regulating unit (34) of the machining device (1).

17. Machining device (1) as claimed in one of the preceding claims, **characterised in that** the drives for the device support (5) are provided in the form of rack and pinion drives (67).

18. Machining device (1) as claimed in one of the preceding claims, **characterised in that** the drives for the device support (51) are provided in the form of spindle drives.

19. Machining device (1) as claimed in one of the preceding claims, **characterised in that** the drives of the device support (51) are electric motors.

20. Machining device (1) as claimed in one of the preceding claims, **characterised in that** the drives of the device support (51) are actuator means, e.g. pressure cylinders, which can be operated by a pressurising medium.

21. Machining device (1) as claimed in one of the preceding claims, **characterised in that** suction means for dust, chips, etc., are disposed on the device support (51).

22. Machining device (1) as claimed in one of the preceding claims, **characterised in that** a coding device (92) is provided as a means of affixing or applying informative data to the plate (2) or component (4).

23. Machining device (1) as claimed in one of the preceding claims, **characterised in that** feeding and/or positioning means for connecting means, e.g. dowel pins, threaded sleeves, etc., are provided on the device support (51).

24. Machining device (1) as claimed in one of the preceding claims, **characterised in that** at least one tool magazine (63) for tools, e.g. sawing, drilling, milling, threading tools and/or tool accessories, e.g. angle head, measuring means, etc., are provided on the pressure beam (38) and/or machine frame (5).

25. Machining device (1) as claimed in one of the preceding claims, **characterised in that** a lifting device (102) is provided in the machine frame (5) for lifting the plate (2) off the support surface (11).

26. Machining device (1) as claimed in one of the preceding claims, **characterised in that** an orifice (87) for the tools of the machining unit (49) is provided in a table panel (10) constituting the support surface (11).

27. Machining device (1) as claimed in one of the preceding claims, **characterised in that** the orifice (87) can be closed, e.g. by means of a flap, slide, etc..

## Revendications

1. Installation d'usinage (1), en particulier installation de scie à panneaux avec un châssis de machine (5) réalisant une face d'application (11) pour les plaques (2), avec un chariot roulant (20) déplaçable dans le bâti de machine (5) dans un agencement de guidage linéaire (18) avec un dispositif d'entraînement, avec au moins un premier appareil d'usinage (3), en particulier un dispositif de scie circulaire (21) et avec une butée de largeur (44) pourvue de moyens de préhension, par exemple de pinces de serrage (48) et ajustables dans une direction perpendiculaire à la direction de déplacement du chariot roulant (20), au moyen d'un entraînement de poussée dans des voies de guidage et avec une poutre de pression (38) s'étendant dans un plan de sciage s'étendant perpendiculairement à la face d'application (11) et ajustable dans la direction perpendiculaire à la face d'application (11), et avec au moins un autre appareil d'usinage (49) avec une installation de commande et de régulation (34) pour l'installation d'usinage (1), **caractérisée en ce que** l'autre appareil d'usinage (49) est disposé sur un support de dispositif (51) disposé dans la zone entre la poutre de pression (38) et la butée de largeur (44) et est formé de préférence par une unité de perçage et/ou de fraisage (50), et le support de dispositif (51) est logé d'une manière ajustable dans au moins un dispositif de guidage linéaire (55) s'étendant parallèlement à la direction de déplacement du chariot roulant (20).

2. Installation d'usinage (1) selon la revendication 1, **caractérisée en ce que** le support de dispositif (51) est formé par au moins deux éléments de support (68, 73) ou bras de support (96, 97) ajustable l'un relativement à l'autre.

3. Installation d'usinage (1) selon la revendication 1, **caractérisé en ce que** le dispositif de guidage (50) avec le support de dispositif (51) est disposé au-dessus de la face d'application (11).

4. Installation d'usinage (1) selon la revendication 1, **caractérisée en ce que** le dispositif de guidage (55) avec le support de dispositif (51) est disposé en dessous de la face d'application (11).

5. Installation d'usinage (1) selon l'une des revendications précédentes, **caractérisée en ce que** le support de dispositif (51) dans le dispositif de guidage (55) est logé d'une manière pivotante autour d'un axe de pivotement s'étendant parallèlement à la direction de déplacement.

6. Installation d'usinage (1) selon l'une des revendications précédentes, **caractérisée en ce que** les éléments de support (68, 73) ou bras de support (96, 97) du support de dispositif (51) sont reliés d'une manière pivotante l'un à l'autre par un palier de pivotement (98, 99) réalisant un axe de pivotement (100) s'étendant perpendiculairement à la face d'application (11).

7. Installation d'usinage (1) selon l'une des revendications précédentes, **caractérisée en ce que** les éléments de support (68, 73) ou bras de support (96, 97) sont ajustables l'un relativement à l'autre par une commande de pivotement (101).

8. Installation d'usinage (1) selon l'une des revendications précédentes, **caractérisée en ce que** le déplacement des éléments de support (68, 73) respectivement des bras de support (96, 97) a lieu dans des plans parallèles à la face d'application (11).

9. Installation d'usinage (1) selon l'une des revendications précédentes, **caractérisée en ce que** le support de dispositif (51) respectivement au moins un élément de support (96, 97) est logé, dans la direction s'étendant perpendiculairement à la face d'application (11), d'une manière ajustable dans le dispositif de guidage (55).

10. Installation d'usinage (1) selon l'une des revendications précédentes, **caractérisée en ce que** l'appareil d'usinage (49) est logé d'une manière pivotante au support de dispositif (51) respectivement à un élément de support (68, 73).

11. Installation d'usinage (1) selon l'une des revendications précédentes, **caractérisée en ce que** le support de dispositif (51) et/ou les éléments de support (68, 73) et/ou l'appareil d'usinage (49) est réalisé d'une manière ajustable dans une direction perpendiculaire à la face d'application (11).

12. Installation d'usinage (1) selon l'une des revendications précédentes, **caractérisée en ce que** le dispositif de guidage (55) pour le support de dispositif (51) est disposé à la poutre de pression (38).

13. Installation de traitement (1) selon l'une des revendications précédentes, **caractérisée en ce que** le dispositif de guidage (55) est disposé sur un profilé de support (65) s'étendant parallèlement à la poutre de pression (38), s'appuyant sur le châssis de machine (5).

14. Installation d'usinage (1) selon l'une des revendications précédentes, **caractérisée en ce que** le dispositif de guidage (55) pour le support de dispositif (51) est logé d'une manière déplaçable dans des voies de guidage des longerons de guidage (16, 17) de la butée de largeur (44).

15. Installation d'usinage (1) selon l'une des revendications précédentes, **caractérisée en ce que** le dispositif de guidage (55) pour le support de dispositif (51) est logé d'une manière déplaçable le long d'un profilé de guidage (89) disposé à la butée de largeur (44).

16. Installation d'usinage (1) selon l'une des revendications précédentes, **caractérisée en ce que** les entraînements du support de dispositif (51) et/ou de l'appareil d'usinage (49) sont reliés par des lignes à l'installation de commande et de régulation (34) de l'installation d'usinage (1).

17. Installation d'usinage (1) selon l'une des revendications précédentes, **caractérisée en ce que** les entraînements pour le support de dispositif (51) sont formés par des engrenages à crémaillère (67).

18. Installation d'usinage (1) selon l'une des revendications précédentes, **caractérisée en ce que** les entraînements pour le support de dispositif (51) sont formés par des entraînements à broche.

19. Installation d'usinage (1) selon l'une des revendications précédentes, **caractérisée en ce que** les entraînements du support de dispositif (51) sont formés par des moteurs électriques.

20. Installation d'usinage (1) selon l'une des revendications précédentes, **caractérisée en ce que** les entraînements du support de dispositif (51) sont formés par un moyen de positionnement pouvant être chargé par un milieu sous pression, par exemple des cylindres de pression.

21. Installation d'usinage (1) selon l'une des revendications précédentes, **caractérisée en ce que** sont disposés au support de dispositif (51) des moyens d'aspiration pour la poussière, les copeaux etc.

22. Installation d'usinage (1) selon l'une des revendications précédentes, **caractérisée en ce que** sont disposés au support de dispositif (51) un dispositif de caractérisation (92) pour l'application de données d'information sur la plaque (2) respectivement le composant (4).

23. Installation d'usinage (1) selon l'une des revendications précédentes, **caractérisée en ce que** sont disposés au support de dispositif (51) des moyens d'amenée et/ou de pose pour des moyens d'assemblage, par exemple des chevilles, douilles filetées etc.

24. Installation d'usinage (1) selon l'une des revendications précédentes, **caractérisée en ce qu'**est disposé à la poutre de pression (38) et/ou au bâti de machine (5) au moins un magasin d'outils (63) pour des outils, par exemple des outils de sciage, perçage, fraisage, taraudage et/ou des dispositifs d'outil, par exemple, équerre, moyens de mesure, etc.

25. Installation d'usinage (1) selon l'une des revendications précédentes, **caractérisée en ce qu'**est disposé dans le bâti de machine (5) un dispositif de levage (102) pour relever la plaque (2) de la face d'application (11).

26. Installation d'usinage (1) selon l'une des revendications précédentes, **caractérisée en ce qu'**est disposé dans un plateau de table (10) formant la face d'application (11) un perçage (87) pour les outils de l'appareil d'usinage (49).

27. Installation d'usinage (1) selon l'une des revendications précédentes, **caractérisée en ce que** le perçage (87) peut être fermé, par exemple par un volet, coulisseau etc.
